# FASCICULE DE BREVET EUROPEEN

(11) **EP 1 173 723 B1**
(45) Date de publication et mention de la délivrance du brevet: **18.11.2009**
(21) Numéro de dépôt: 00922694.5
(22) Date de dépôt: 20.04.2000
(51) Int. Cl.: G01B 11/00, G01C 15/00, B25J 9/16, G01B 21/04

(54) **PROCEDE DE CONTRÔLE DE LA GEOMETRIE DE VEHICULE AUTOMOBILE**
VERFAHREN ZUR PRÜFUNG DES PROFILS EINES KRAFTFAHRZEUGS
METHOD FOR CONTROLLING THE GEOMETRY OF A MOTOR VEHICLE

(30) Priorité: 23.04.1999 FR 9905181
(43) Date de publication de la demande: 23.01.2002
(73) Titulaire: Process Conception Ingenierie S.A., 92190 Meudon (FR)
(72) Inventeur: DOUSS, Maher, F-92350 Le Plessis-Robinson (FR); MESSAGER, Robert, F-92290 Chatenay-Malabry (FR); RASSON, Didier, F-91140 Villebon S/Yvette (FR); WALTREGNY, Sébastien, Résidence le Cornouiller, 78870 Bailly (FR)
(74) Mandataire: Berger, Helmut
(86) Numéro de dépôt international: PCT/FR2000/001041
(87) Numéro de publication internationale: WO 2000/065305

(56) Documents cités:
- EP-A- 0 528 054
- US-A- 4 788 440
- US-A- 5 148 377
- US-A- 5 748 505

## Description

L'invention concerne les procédés de contrôle de la géométrie de sous-ensembles de véhicules automobiles, et notamment des caisses des véhicules.

On connaît le principe consistant à disposer des capteurs optiques de type à triangulation optique sur un support et à faire passer les caisses d'une ligne de production à l'intérieur d'un tel support, de sorte que les capteurs mesurent chacun l'écart de positionnement d'un repère donné de la caisse par rapport à une position attendue pour ce repère.

De tels montages, s'ils permettent un contrôle continu en cours de production, présentent cependant des inconvénients importants.

Les capteurs sont généralement boulonnés sur une structure tubulaire dans des emplacements correspondant chacun à un repère de la caisse à contrôler et un repositionnement des capteurs pour contrôler une nouvelle silhouette nécessite une manutention importante.

Le brevet EP 0 528 054 se rapporte à un système de correction de position de détection d'un objet, à partir de données de calibration. Le principe est de détecter le déplacement d'un robot entre une position de départ et une position d'arrivée. Connaissant le positionnement du capteur dans la position de départ ainsi que le déplacement détecté, on en déduit le positionnement des capteurs du moment de la mesure finale. Le brevet US 5 148 377 concerne un système de mesure coordonné, impliquant un ordinateur, une base fixée à l'objet à mesurer, et un bras rotatif par rapport à ladite base. Enfin, le brevet US 4,788,440 Décrit des systèmes électro-optiques pour le contrôle des robots, des bras manipulateurs et des machines de mesures coordonnées.

Un but de l'invention est de proposer un procédé de contrôle de géométrie qui soit flexible, c'est-à-dire qui permette de changer de silhouette à contrôler sans opération longue sur le dispositif de contrôle.

Ce but est atteint selon l'invention grâce à un procédé de contrôle de la géométrie d'un sous-ensemble, notamment de véhicule automobile, dans lequel on utilise un capteur optique pour mesurer le positionnement de repères formés sur le sous-ensemble, et comprenant les étapes suivantes :
a) placer le capteur optique sur un robot ;
b) placer un sous-ensemble ayant une géométrie de référence devant le robot, et faire prendre au robot des positions dans lesquelles le capteur est à chaque fois positionné face à un repère de positionnement connu dans le référentiel du véhicule.
c) pour chaque position, enregistrer dans un module de commande la position du robot, déclencher le capteur et mettre en oeuvre un calage des résultats de mesure de celui-ci pour les faire correspondre au positionnement connu du repère dans le référentiel du véhicule ;
d) placer un sous-ensemble à contrôler devant le robot ;
e) faire répéter au robot les positions enregistrées et, pour chacune de ces positions, mesurer avec le capteur la position du repère en utilisant le même calage de mesure que celui mis en oeuvre pour cette même position du robot à l'étape c), de façon à obtenir la position du repère dans le préférentiel du véhicule,
f) faire répéter au robot (110) des positions préenregistrées face à au moins une cible (407) de référence fixe,
g) mesurer une dérive de positionnement du capteur (115) par rapport à une position attendue du capteur (115) relativement à cette cible de référence (407).

D'autres caractéristiques, buts et avantages de l'invention apparaîtront à la lecture de la description détaillée qui va suivre, faite en référence aux figures annexées sur lesquelles :

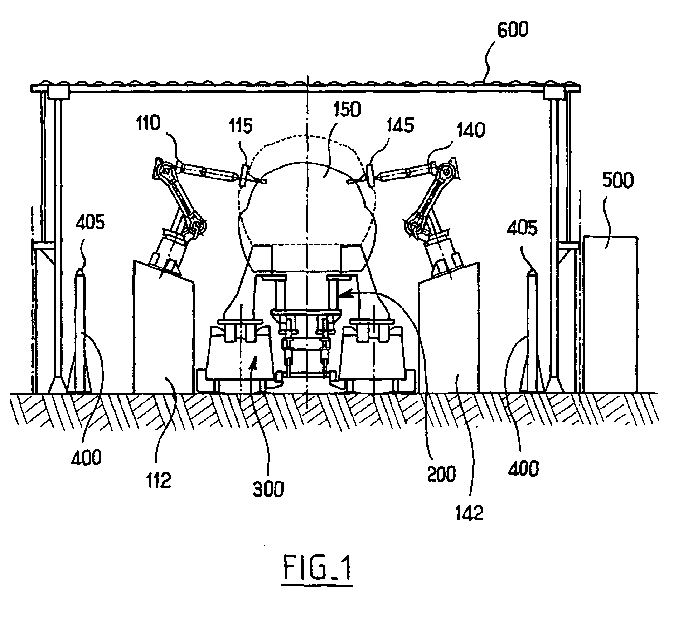

- la figure 1 est une vue de côté d'un dispositif de contrôle de géométrie;
- la figure 2 est une vue de dessus de ce même dispositif ;
- la figure 3 est une vue détaillée d'un plot de référence utilisé dans ce même dispositif ;
- la figure 4 représente sous forme de blocs fonctionnels ce même dispositif de contrôle.

Le présent dispositif de contrôle de géométrie comporte cinq parties principales :
- un ensemble de quatre robots 110, 120, 130, 140 de type « anthropomorphes à six axes série » ;
- un système 200 de transport et de positionnement de caisse ;
- un module 500 de commande des robots et de traitement des mesures effectuées ; et
- une série de cibles de référence fixes prévues sur des plots 405..

Le présent système de transport et de positionnement de la caisse 200 comporte un chariot mobile sur des rails traversant le dispositif. Le chariot transporte la caisse jusqu'à la positionner au-dessus d'un support fixe 300 muni de références de positionnement. Lorsque la caisse est au-dessus du support, le chariot s'efface vers le bas, de sorte qu'il pose la caisse sur le support, sensiblement sur les références de positionnement. Le support est muni de moyens pour affiner la position de la caisse dans le dispositif, une fois posée sur lui.

Le support 300 comporte également une série de capteurs aptes à indiquer des distances entre la caisse et les surfaces de référence de positionnement. Le chariot transporte ainsi une caisse 150 en position adéquate entre les quatre robots, où elle est laissée en place pour une durée choisie.

Les quatre robots 110, 120, 130, 140 sont placés deux par deux de chaque côté de l'axe de déplacement du support 200.

Grâce à une telle disposition des robots, on tire parti, comme on le comprendra par la suite, de la symétrie de la caisse du véhicule.

Les inventeurs ont pu constater que de tels robots « anthropomorphes à six axes série » sont particulièrement aptes à reprendre sur commande une position préenregistrée, avec une répétabilité satisfaisante.

Un tel robot est plus avantageux qu'un robot comportant une chaîne fermée ou robot à transmission par parallélogramme, qui s'est avéré mal adapté à ce genre d'utilisation.

Le bras de chaque robot 110, 120, 130, 140 formant son extrémité libre porte un capteur optique 115, 125, 135, 145 à triangulation optique tel que ceux destinés à des mesures optiques classiques, disponibles notamment auprès de la société PERCEPTRON ou DIFFRACTO. Ils fonctionnent par mesure de l'impact d'un flux laser à l'aide d'une caméra.

Les robots 110 à 140 sont montés sur des supports correspondants 112, 122, 132, 142 en acier qui présentent une face supérieure inclinée sur laquelle est fixée la base du robot.

De cette façon, chaque robot penche vers le véhicule, de sorte que le premier axe d'articulation du robot est en permanence en appui sur un de ses côtés, c'est à dire ici le côté tourné vers le véhicule, sous l'effet de la pesanteur.

Une telle disposition permet donc d'éviter l'apparition de jeux dans la première articulation du robot.

Dans une première étape, on inculque aux robots différentes positions correspondant chacune à un positionnement précis de leur capteur optique d'extrémité, face à un emplacement attendu d'un repère de la caisse à contrôler. Ce réglage est effectué en plaçant sur le support une caisse de référence dont on connaît la géométrie, cette caisse étant mise en place par l'intermédiaire du système 200.

Chaque robot est ensuite commandé manuellement par un utilisateur de façon à présenter son capteur optique en parfait alignement avec un repère de la caisse de référence , un tel repère pouvant être un trou ou un bord de la caisse.

Une fois le robot placé dans une telle position idéale, l'opérateur enregistre dans la mémoire de commande du module 500 la position exacte du robot.

L'opérateur déclenche ensuite le capteur optique porté par le robot, qui fournit un résultat de mesure. On réalise ensuite un calage de la mesure de telle façon que le résultat indiqué soit le positionnement connu du repère dans le référentiel du véhicule. Ce calage de mesure est également enregistré en mémoire et associé à la position préenregistrée du robot.

Une fois ces enregistrements de référence effectués pour chacun des robots et chacun des repères de la caisse, une caisse à contrôler est mise en place entre les robots et une séquence de mesure est mise en oeuvre.

Le module 500 fait alors répéter à chaque robot une première des positions préenregistrées et déclenche la mesure par le capteur de la position du repère se trouvant sensiblement face au capteur.

Les inventeurs ont pu constater que les robots « anthropomorphes à six axes série » sont particulièrement performants en ce qui concerne leur capacité à reprendre précisément une position déjà adoptée. Ainsi, le robot retrouve ici très précisément la position qui lui a été inculquée par positionnement effectif de celui-ci sur une caisse de référence.

Le capteur 115, 125, 135, 145, replacé dans sa position quasi-idéale, mesure le positionnement du repère du nouveau véhicule en appliquant à cette mesure le calage adapté à l'étape de mesure sur la caisse de référence, pour cette même position du robot, de façon à indiquer après ce calage le positionnement du repère dans le référentiel du véhicule. Ce calage reste adapté à cette nouvelle mesure puisqu'il consiste à caler les mesures du capteur en tenant compte de la position dans laquelle se trouve ce dernier. Or le robot reproduit à l'identique la position qui lui a été inculquée à l'étape où ce calage a été déterminé.

On en déduit ainsi un éventuel écart de positionnement du repère dans le référentiel du véhicule, en tenant compte de la position, préenregistrée, du robot.

Cette opération de mesure est répétée pour chaque repère de la caisse de sorte que le dispositif enregistre la position de chaque repère de la caisse dans le référentiel du véhicule.

Un tel positionnement précis ne serait pas possible par une pré-programmation du robot en référence à des emplacements théoriques qu'il n'aurait jamais adopté en pratique. La précision de positionnement du robot est ici d'environ quelques dixièmes de millimètres.

Les mouvements répétés des robots induisent des échauffements de leurs différents composants mécaniques et notamment de leurs bras rectilignes qui induisent des dérives géométriques du robot et donc une dérive de positionnement des capteurs par rapport aux positionnements idéaux préenregistrés. De telles dérives peuvent également être dues à des écarts de température ambiante.

Ainsi, la répétabilité du robot au départ a été mesurée à environ 5/100^{ème} de millimètre d'incertitude. Cette répétabilité se dégrade lorsqu'il chauffe pour arriver jusqu'à une dérive d'environ 3 dixièmes de milimètres.

On propose pour pallier cet inconvénient de placer une série de cibles fixes de référence au voisinage de chacun des robots. Ces cibles sont ici des trous réalisés dans des plots métalliques 405 creux, placés sur des mâts 400 fixés au sol.

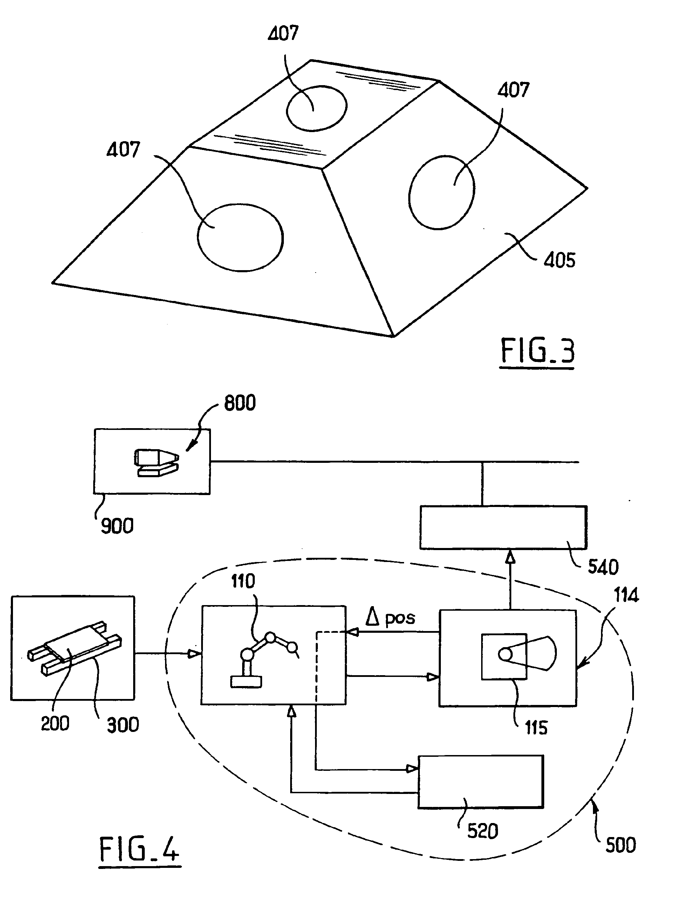

Tel que représenté à la figure 3, un tel plot 405 est constitué d'une coque métallique en forme de pyramide à base carrée, dont le sommet est tronqué selon un plan horizontal, formant ainsi cinq faces dont chacune est traversée par un trou circulaire 407 formant à chaque fois une cible.

Un tel plot 405 dont les faces latérales sont inclinées présente une accessibilité importante pour le robot dont le bras articulé arrive sur le plot 405 par le dessus, tout en permettant une sollicitation importante des différents degrés de liberté de ce dernier pour accéder aux différentes faces.

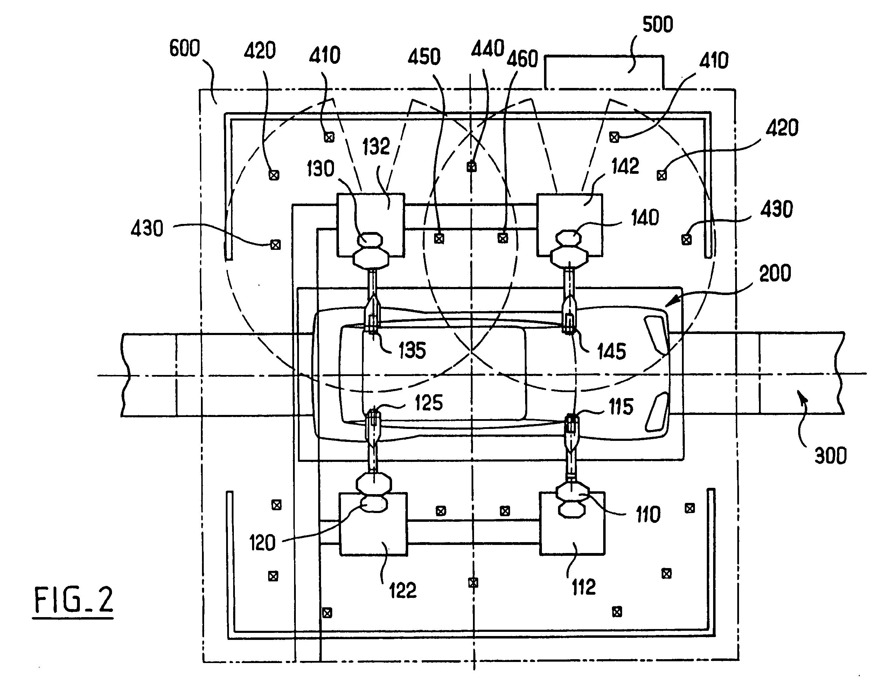

On a représenté, en traits interrompus sur la figure 2, la périphérie de la zone d'intervention des robots 130 et 140 placés d'un même côté de la caisse. Pour chacun des robots, six plots fixes sont répartis dans sa zone d'intervention à des hauteurs et des éloignements variés par rapport au robot.

Dans la zone d'intervention des robots 130 et 140, trois plots de référence 410, 420, 430 sont placés à proximité de la périphérie de la zone d'intervention, selon une répartition angulaire sensiblement uniforme autour du support considéré.

Trois autres plots 440, 450, 460 sont répartis uniformément dans une zone d'intersection entre les deux plages d'intervention des deux robots 130 et 140 de sorte que ces plots sont partagés par les deux robots.

Pendant le cycle de transfert entre deux caisses, chaque robot vient positionner son capteur devant certaines cibles 407 de certains des plots 405 situés autour de lui. Pour cela, le module 500 comporte en mémoire des positionnements idéaux de chacun des robots, préenregistrés et correspondant à un positionnement idéal du capteur optique dans l'alignement direct de chaque cible 407.

Lorsque le capteur est ainsi placé face à la cible, le module 500 détecte un écart de positionnement de la cible 407 dans le repère du capteur, qui est due totalement à la dérive géométrique du robot, puisque la cible 407 est restée fixe.

Avantageusement, la mesure de dérive est effectuée en temps masqué.

Après une telle mesure de variation géométrique du robot, le module 500 commande une correction du positionnement du robot de façon à annuler la dérive dans le repositionnement du robot, de sorte que celui-ci reprend, pendant la mesure sur caisse, les emplacements idéaux enregistrés par rapport à la caisse de référence.

Selon un autre mode de réalisation, le capteur mesure un écart de positionnement qui est dû à l'écart de géométrie du robot et transmet au module 500 cette mesure, que le module 500 interprète comme une variation géométrique du robot à retrancher aux résultats de mesure sur une caisse à venir.

Selon un mode de réalisation avantageux, le module 500 commande une mesure de dérive sur une première cible et, en fonction de la présence ou non d'une dérive, commande ou non une mesure complète sur l'ensemble des cibles. Cette mesure complète peut être effectuée totalement pendant une seule phase de transfert, ou répartie sur plusieurs phases de transfert successives. La mesure de dérives thermiques n'est donc effectuée que si nécessaire.

Avantageusement, les plots 405 sont répartis à différentes hauteurs et à différents éloignements par rapport au robot, de façon à ce que chaque mesure sur un plot fixe nécessite un positionnement particulier du robot, adapté pour susciter une manifestation d'une dilatation d'une partie spécifique du robot.

Ainsi, un plot placé à distance du robot permet de mesurer la dilatation des bras de l'extrémité libre de celui-ci, et une mesure en hauteur de mesurer la dilatation des bras du robot adjacents à sa base.

Plus généralement, on dispose avantageusement les différents plots de référence dans des positions correspondant sensiblement aux positions du robot lors des différentes mesures sur la caisse.

On choisit notamment pour les cibles, des hauteurs qui correspondent aux hauteurs des points de mesure sur la caisse. De cette façon, on excite à chaque cible de référence les différents paramètres du robot qui vont être sollicités dans la mesure sur le véhicule.

Ainsi, les compensations à appliquer sont déterminées dans des positions du robot qui sont effectivement reprises par celui-ci lors de la mesure.

Le robot utilisé ayant six axes, les dérives géométriques de ce dernier sont représentées à l'aide de vingt quatre paramètres, c'est à dire quatre paramètres par axe, consistant en deux mesures de décalage en position et deux mesures de décalage angulaire entre les deux extrémités d'un bras.

Chaque mesure sur une cible permet une mesure de 3 paramètres représentatifs de la dérive d'ensemble. Il est donc nécessaire pour résoudre un système à 24 inconnues de réaliser au moins 24 mesures représentatives du décalage.

En pratique, on réalise la mesure sur cinq cibles par plot à raison de six plots par robots, c'est-à-dire 6 x 5 mesures de cibles permettant chacune le calage de 3 paramètres. On mesure donc 90 paramètres représentatifs de la dérive

Le nombre de paramètres mesurés est donc nettement supérieur au nombre de paramètres à caler, de sorte que le système est largement surdéterminé. Une telle surdétermination est mise à profit dans la détermination de la correction à produire, pour un réglage plus précis de la compensation.

Plus généralement, pour un robot à X articulations, les cibles doivent être au moins au nombre de 4X/3 et définir dans leur ensemble 4 X mesures de dérive.

On décrira maintenant, en référence à la figure 4, l'ensemble de commande d'un tel dispositif de contrôle de géométrie.

Cet ensemble de commande comprend comme décrit précédemment :
- un automate pour commander le transport des caisses par le chariot sur le support et pour commander les moyens de déplacement,
- une baie de robot 110, représentée seule ici pour simplification de l'exposé ;
- une armoire de mesure 114 pour commander un capteur de position 115, placé à l'extrémité de ce robot.

Le module 500 est représenté sur la figure 4. Il comprend la baie 110, l'armoire 114 et le module 520, le module 520 étant un ordinateur de traitement de la dérive du robot 110. Le dispositif comprend également un module 540 qui est un module de traitement et d'enregistrement des données d'écarts géométriques mesurés par le capteur 115.

Pour contrôler la dérive du robot, la baie du robot 110 commande à celui-ci de venir placer son capteur 115 face à une cible de référence 407. Puis elle commande le déclenchement de la mesure optique par le capteur 115. L'armoire de mesure 114 du capteur 115 génère alors le résultat de la mesure sous forme d'un écart géométrique Δpos qui est transmis, par l'intermédiaire de la baie de robot 110, au module 520.

Le module 520 tient alors compte de cet écart Δpos pour déterminer une trajectoire qui permet de positionner le robot 110 face aux différents repères de la caisse, selon une trajectoire mesurée à partir de la cible de référence 407, dans laquelle trajectoire le module 520 intègre la compensation correspondant à la dérive Δpos.

Une fois le robot positionné, l'armoire 114 commande la mesure optique par le capteur 115. La donnée d'écart géométrique réalisée sur la caisse est alors transmise à un module de métrologie 540 qui transmet, éventuellement après traitement, un compte-rendu directement interprétable par un opérateur de production sur un dispositif d'affichage 800 placé dans un local central 900, ces données ayant été acheminées au local central par l'intermédiaire d'un réseau local.

L'automate commande les éléments 200 et 300 pour apporter un nouveau véhicule à l'emplacement de mesure.

Cet automate est avantageusement muni de moyens aptes à indiquer, à l'arrivée de la caisse dans le dispositif, le modèle de véhicule qu'il porte et qui doit être contrôlé.

Le module 500 reçoit de l'automate les différents jeux de paramètres correspondant chacun à un des modèles de véhicule en production, il adapte les différentes étapes de mesure et de traitement en fonction du modèle de véhicule à traiter de sorte que le dispositif s'adapte instantanément et automatiquement à la nouvelle silhouette.

L'invention ne se limite pas au mode de réalisation décrit ici.

En particulier, elle peut être mise en oeuvre pour le contrôle de la géométrie de tout autre sous-ensemble de véhicule automobile.

## Revendications

1. Procédé de contrôle de la géométrie d'un sous-ensemble (150), notamment de véhicule automobile, dans lequel on utilise un capteur optique (115, 125, 135, 145) pour mesurer le positionnement de repères formés sur le sous-ensemble (150), comprenant les étapes suivantes:
a) placer le capteur optique (115) sur un robot (110) ;
b) placer un sous-ensemble (150) ayant une géométrie de référence devant le robot (110), et faire prendre au robot (110) des postions dans lesquelles le capteur (115) est à chaque fois positionné face à un repère de positionnement connu dans le référentiel du véhicule ;
c) pour chaque position du robot (110), enregistrer dans un module de commande (110, 114, 520) la position du robot (110), déclencher le capteur et mettre en oeuvre un calage des résultats de mesure de celui-ci pour les faire correspondre au positionnement connu du repère dans le référentiel du véhicule ;
d) placer un sous-ensemble à contrôler devant le robot (110);
e) faire répéter au robot (110) les positions enregistrées du robot (110) et, pour chacune de ces positions, mesurer avec le capteur (115) la position du repère en utilisant le calage de mesure mis en oeuvre pour cette même position de robot à l'étape c), de façon à obtenir la position du repère dans le référentiel du véhicule,
**caractérisé en ce qu**'il comprend également les étapes consistant à :
f) faire répéter au robot (110) des positions préenregistrées face à au moins une cible (407) de référence fixe,
g) mesurer une dérive de positionnement du capteur (115) par rapport à une position attendue du capteur (115) relativement à cette cible de référence (407).

2. Procédé selon la revendication 1, **caractérisé en ce que** l'on compense les mesures de position des repères du sous-ensemble (150) par les mesures de dérive de positionnement du capteur (115).

3. Procédé selon la revendication 1, **caractérisé en ce qu'**après les mesures de dérive de positionnement du robot (110) et avant d'effectuer les mesures sur le sous-ensemble (150), on applique au robot (110) une correction de positionnement qui annule sensiblement cette dérive.

4. Procédé selon l'une des revendications 1 à 3, **caractérisé en ce que** les cibles de référence (407) fixes sont placées à des emplacements correspondant à des positions du robot (110) proches de celles qu'il adopte lorsqu'il réalise des mesures sur le sous-ensemble (150).

5. Procédé selon l'une des revendication 1 à 3, caracterisé en que les cibles de référence (407) fixes sont placées à des hauteurs et à des distances d'une base de fixation (112) du robot qui sont celles qu'il adopte, lorsqu'il réalise des mesures sur le sous-ensemble (150).

6. Procédé selon l'une des revendications 1 à 5, **caractérisé en ce que** les cibles de référence (407) sont placées à des hauteurs déférentes et à des distances différentes d'une base de fixation (112) du robot (110).

7. Procédé selon l'une des revendications 1 à 6, **caractérisé en ce que,** le robot (110) comportant un nombre X de degrés de libertés, le nombre de cibles de références (407) fixes est supérieur ou égal à 4X/3.

8. Procédé selon l'une des revendications 1 à 7, **caractérisé en ce que** les cibles (407) sont placées sur les faces d'une pyramide (405) à sommet tronqué.

9. Procédé selon l'une des revendications précédentes, **caractérisé en ce que** le robot (110) est un robot « anthropomorphe à six axes série ».

10. Procédé selon l'une des revendications précédentes, **caractérisé en ce que** te robot (110) est placé sur une base inclinée (112) de manière à ce que la première articulation soit en permanence en appui d'un même côté au cours du contrôle de géométrie.

## Claims

1. Method for checking the geometry of a subassembly (150), notably of a motor vehicle, in which method use is made of an optical sensor (115, 125, 135, 145) to measure the positioning of reference marks formed on the subassembly (150), comprising the following steps:
a) placing the optical sensor (115) on a robot (110);
b) placing a subassembly (150) of reference geometry on front of the robot (140) and having the robot (110) adopt positions in which the sensor (115) is in each instance positioned facing a known positioning reference mark in the frame of reference of the vehicle;
c) for each position of the robot (110), recording the position of the robot (110) in a control module (110, 114, 520), triggering the sensor and aligning the measurement results thereof in order to cause them to correspond to the known positioning of the reference mark in the frame of reference of the vehicle;
d) placing before the robot (110) a subassembly that is to be checked;
e) having the robot (110) repeat the recorded positions of the robot (110) and, for each of these positions, using the sensor (115) to measure the position of the reference mark using the measurement alignment performed for this same robot position in step c), so as to obtain the position of the reference mark in the frame of reference of the vehicle, **characterized in that** it also comprises the steps consisting in:
f) having the robot (110) repeat prerecorded positionings facing at least one fixed reference target (407),
g) measuring a deviation in the positioning of the sensor (115) with respect to an expected position of the sensor (115) relative to this reference target (407).

2. Method according to Claim 1, **characterized in that** the measurements of the deviation in positioning of the sensor (115) are used to compensate the position measurements for the reference marks of the subassemblies (150).

3. Method according to Claim 1, **characterized in that** after measuring the deviations in positioning of the robot (110) and before taking measurements on the subassembly (150), a position correction which more or less cancels this deviation is applied to the robot (110).

4. Method according to one of Claims 1 to 3, **characterized in that** the fixed reference targets (407) are positioned at locations corresponding to positions of the robot (110) that are close to the positions it adopts when it makes measurements on the subassembly (150).

5. Method according to one of Claims 1 to 3, **characterized in that** the fixed reference targets (407) are positioned at heights and at distances form an attachment base (112) of the robot which heights and distances are those that it adopts when making measurement from the subassembly (150).

6. Method according to one of Claims 1 to 5, **characterized in that** the reference targets (407) are placed at different heights and at different distances from an attachment base (112) of the robot (110).

7. Method according to one of Claims 1 to 6, **characterized in that**, with the robot (110) having a number X of degrees of freedom, the number of fixed reference targets (407) is greater than or equal to 4X/3.

8. Method according to one of Claims 1 to 7, **characterized in that** the targets (407) are placed on the faces of a pyramid (405) with a truncated vertex.

9. Method according to one of the preceding claims, **characterized in that** the robot (110) is a production "six-axis anthropomorphic robot".

10. Method according to one of the preceding claims, **characterized in that** the robot (110) is positioned on an inclined base (112) so that the first joint is constantly against the same one of its end stops during the check on geometry.

## Patentansprüche

1. Verfahren zur Prüfung der Geometrie einer Untereinheit (150), insbesondere eines Kraftfahrzeugs, bei dem ein optischer Sensor (115, 125, 135, 145) verwendet wird, um die Positionierung von Markierungen zu messen, die auf der Untereinheit (150) ausgebildet sind, das die folgenden Schritte aufweist:
a) Anordnen des optischen Sensors (115) auf einem Roboter (110);
b) Anordnen einer Untereinheit (150) mit einer Bezugsgeometrie vor dem Roboter (110), und Einnehmen durch den Roboter (110) von Positionen, in denen der Sensor (115) jedes Mal gegenüber einer bekannten Positionsmarkierung im Bezugssystem des Fahrzeugs positioniert ist;
c) für jede Position des Roboters (110), Speichern der Position des Roboters (110) in einem Steuermodul (110, 114, 520), Starten des Sensors und Durchführen eine Einstellung von dessen Messergebnissen, um sie mit der bekannten Positionierung der Markierung im Bezugssystem des Fahrzeugs in Übereinstimmung zu bringen;
d) Anordnen einer zu prüfenden Untereinheit vor dem Roboter (110);
e) den Roboter (110) die gespeicherten Positionen des Roboters (110) wiederholen lassen, und, für jede dieser Positionen, Messen der Position der Markierung mit dem Sensor (115), indem die Messeinstellung verwendet wird, die für diese gleiche Roboterposition im Schritt c) durchgeführt wurde, um die Position der Markierung im Bezugssystem des Fahrzeugs zu erhalten;
**dadurch gekennzeichnet, dass** es ebenfalls die Schritte aufweist, die darin bestehen:
f) Wiederholen durch den Roboter (110) von voreingespeicherten Positionen gegenüber mindestens einem ortsfesten Bezugsziel (407),
g) Messen einer Positionierabweichung des Sensors (115) im Vergleich mit einer erwarteten Position des Sensors (115) bezüglich dieses Bezugsziels (407).

2. Verfahren nach Anspruch 1, **dadurch gekennzeichnet, dass** die Positionsmessungen der Markierungen der Untereinheit (150) durch die Positionierabweichungsmessungen des Sensors (115) kompensiert werden.

3. Verfahren nach Anspruch 1, **dadurch gekennzeichnet, dass** nach den Positionierabweichungsmessungen des Roboters (110) und vor der Durchführung der Messungen an der Untereinheit (150) eine Positionierungskorrektur an den Roboter (110) angewendet wird, die diese Abweichung im Wesentlichen annulliert.

4. Verfahren nach einem der Ansprüche 1 bis 3, **dadurch gekennzeichnet, dass** die ortsfesten Bezugsziele (407) sich an Stellen befinden, die Positionen des Roboters (110) nahe denjenigen entsprechen, die er einnimmt, wenn er Messungen an der Untereinheit (150) durchführt.

5. Verfahren nach einem der Ansprüche 1 bis 3, **dadurch gekennzeichnet, dass** die ortsfesten Bezugsziele (407) in Höhen und Abständen von einem Befestigungssockel (112) des Roboters angeordnet sind, die diejenigen sind, die er einnimmt, wenn er Messungen an der Untereinheit (150) durchführt.

6. Verfahren nach einem der Ansprüche 1 bis 5, **dadurch gekennzeichnet, dass** die Bezugsziele (407) in unterschiedlichen Höhen und in unterschiedlichen Abständen von einem Befestigungssockel (112) des Roboters (110) angeordnet sind.

7. Verfahren nach einem der Ansprüche 1 bis 6, **dadurch gekennzeichnet, dass**, wenn der Roboter (110) eine Anzahl X von Freiheitsgraden aufweist, die Anzahl von ortsfesten Bezugszielen (407) höher als oder gleich 4X/3 ist.

8. Verfahren nach einem der Ansprüche 1 bis 7, **dadurch gekennzeichnet, dass** die Ziele (407) auf den Seiten einer Pyramide (405) mit abgestumpftem Scheitel angeordnet sind.

9. Verfahren nach einem der vorhergehenden Ansprüche, **dadurch gekennzeichnet, dass** der Roboter (110) ein "anthropomorpher Roboter mit sechs Reihenachsen" ist.

10. Verfahren nach einem der vorhergehenden Ansprüche, **dadurch gekennzeichnet, dass** der Roboter (110) auf einem geneigten Sockel (112) so angeordnet ist, dass das erste Gelenk während der Geometrieprüfung permanent auf der gleichen Seite aufliegt.
